# FASCICULE DE BREVET EUROPEEN

(11) **EP 2 560 833 B1**
(45) Date de publication et mention de la délivrance du brevet: **01.11.2017**
(21) Numéro de dépôt: 11719299.7
(22) Date de dépôt: 25.03.2011
(51) Int. Cl.: B60H 1/24, B60R 13/04, B60Q 1/32, B60R 16/02, B60J 5/04

(54) **BANDEAU DE PROTECTION ET PARTIE DE LA CARROSSERIE D'UN VÉHICULE EQUIPÉE D'UN TEL BANDEAU.**
SCHUTZSTREIFEN UND FAHRZEUGAUFBAUTEIL MIT DERARTIGEM STREIFEN
PROTECTIVE STRIP AND VEHICLE BODY PART COMPRISING SUCH A STRIP

(30) Priorité: 23.04.2010 FR 1053130
(43) Date de publication de la demande: 27.02.2013
(73) Titulaire: PSA Automobiles SA, 78300 Poissy (FR)
(72) Inventeur: LE CAMUS, Cédric, F-78310 Maurepas (FR); DUVERNIER, Frédéric, F-91190 Villiers Le Bacle (FR)
(74) Mandataire: Fernandez, Francis Lionel
(86) Numéro de dépôt international: PCT/FR2011/050651
(87) Numéro de publication internationale: WO 2011/131878

(56) Documents cités:
- FR-A1- 2 606 712
- GB-A- 2 041 606
- US-A1- 2007 032 319

## Description

La présente invention concerne un bandeau de protection en matière plastique destiné à être fixé sur une partie de la carrosserie d'un véhicule automobile.

On connaît des portes latérales de véhicules automobiles comportant un bandeau extérieur recouvrant une partie importante du panneau extérieur pour protéger celui-ci à l'égard des petits chocs urbains. Le document GB 2 041 606 A divulgue un bandeau de protection destiné à être fixé sur une partie de la carrosserie d'un véhicule automobile pour protéger celui-ci à l'égard des petits chocs urbains, comprenant une paroi rigide 8, 10 et une paroi 1 en matière plastique souple, ces deux parois étant en contact l'une avec l'autre dans des zones qui entourent des zones dans lesquelles ces deux parois 1; 8, 10 sont espacées l'une de l'autre, la paroi rigide 8, 10 comportant sur l'une de ses faces des premiers moyens de fixation 9 pour fixer celle-ci à ladite partie de la carrosserie et la paroi 1 en matière souple recouvrant l'autre face de la paroi rigide 8, 10, ledit bandeau étant équipé d'au moins un équipement 15, 16, 17 ayant une fonction technique (alarme) distincte des moyens de fixation 9 dudit bandeau à ladite partie de la carrosserie du véhicule. Le but de la présente invention est de créer un bandeau de protection assurant une meilleure protection à l'égard des petits chocs urbains et qui est adapté pour remplir d'autres fonctions que cette protection.

Ce but est atteint, selon l'invention, grâce à un bandeau de protection en matière plastique selon la revendication 1. De tels équipements peuvent être par exemple des appareils d'éclairage, des extracteurs d'air, des capteurs, des enjoliveurs, des dispositifs de maintien des faisceaux électriques et analogues.

De tels équipements étaient jusqu'à présent fixés directement sur la tôle de la porte ou de la carrosserie du véhicule, qu'il s'agisse d'un pare-choc ou d'une aile latérale.

Le fait de prééquiper le bandeau de protection d'au moins un équipement tel que ceux cités ci-dessus permet de simplifier la réalisation des parties en tôle de la carrosserie et de faire des économies de montage.

Ainsi, grâce aux zones dans lesquelles la paroi souple est espacée de la paroi rigide, le bandeau selon l'invention est non seulement capable de se déformer en cas de choc et ainsi de mieux absorber les petits chocs urbains, mais est également apte à supporter les équipements ci-dessus. De préférence, les seconds moyens de fixation peuvent être adaptés pour coopérer avec un bord de la paroi en matière souple pour réaliser une liaison étanche entre ledit équipement et le bandeau.

Ces dispositions conviennent en particulier lorsque l'équipement est un appareil d'éclairage, un capteur ou en enjoliveur.

Selon un autre aspect, l'invention concerne également une partie de la carrosserie équipée d'un bandeau de protection selon l'invention.

Plus particulièrement, la partie de carrosserie est une porte latérale ou un pare-choc ou une aile latérale de véhicule automobile.

D'autres particularités et avantages de l'invention apparaîtront encore tout au long de la description ci-après.

Aux dessins annexés, donnés à titre d'exemples, non limitatifs :
- la figure 1 est une vue latérale partielle d'un véhicule automobile équipé de portes latérales munies de bandeaux, selon l'invention,
- la figure 2 est une vue en coupe, à échelle agrandie, suivant le plan II-II de la figure 1,
- la figure 3 est une vue en perspective d'une porte latérale dont le bandeau est équipé d'un appareil d'éclairage,
- la figure 4 est une vue en perspective à échelle agrandie de l'appareil d'éclairage représenté sur la figure 3,
- la figure 5 est une vue en coupe, à échelle davantage agrandie, suivant le plan V-V de la figure 4,
- la figure 8 est une vue en perspective éclatée d'un autre mode de réalisation d'un extracteur d'air équipant un bandeau de porte,
- la figure 9 est une vue en coupe partielle d'un bandeau de porte équipé d'un enjoliveur,
- la figure 10 est une autre vue en coupe partielle d'un bandeau de porte équipé d'un enjoliveur,

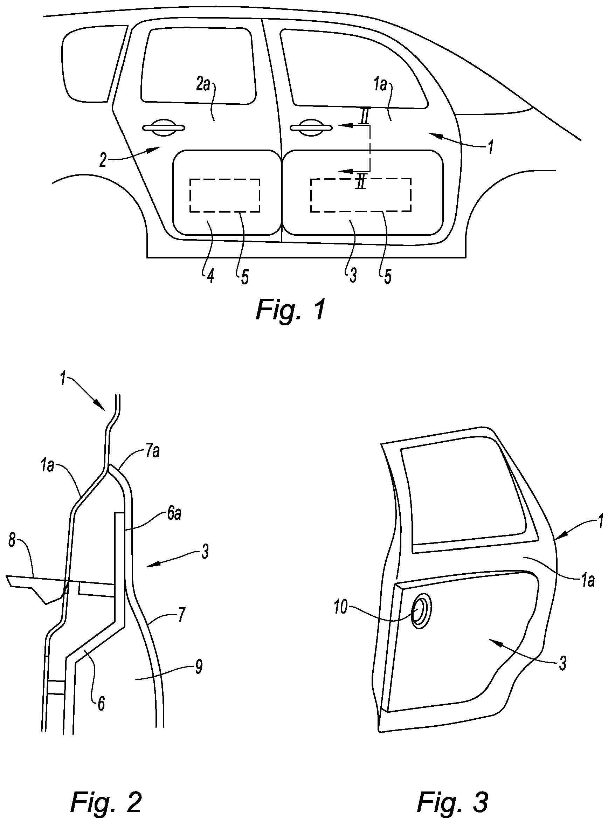

La figure 1 représente un véhicule automobile dont les portes latérales 1, 2 sont équipées de bandeaux de protection 3, 4.

Chacun des bandeaux 3, 4 recouvre une partie importante du panneau extérieur en tôle 1a, 2a de la porte 1, 2.

Les bandeaux 3, 4 recouvrent chacun un ou plusieurs ajours 5 découpés dans le panneau 1a, 2a.

Chaque bandeau 3 ou 4 comprend, comme montré par la figure 2, une paroi intérieure 6 en matière plastique rigide et une paroi extérieure 7 en matière plastique souple qui est collée ou soudée sur au moins une partie 6a de la surface de la paroi en matière rigide 6.

La matière plastique souple de la paroi 7 peut être un élastomère.

Ces deux parois 6 et 7 peuvent être fixées sur le panneau en tôle 1a ou 2a au moyen d'agrafes telle que l'agrafe 8, montrée sur la figure 2, reliées à la paroi rigide 6 du bandeau 3 ou 4 pouvant s'encliqueter dans des trous réalisés dans le panneau 1a ou 2a.

Comme on le voit sur la figure 2, les deux parois 6, 7 peuvent être séparées par une ou plusieurs cavités 9 remplies d'air ou de gel pour absorber les petits chocs latéraux.

L'étanchéité entre le bandeau 3 ou 4 et le panneau 1a ou 2a de la porte est réalisée grâce à une lèvre périphérique 7a de la paroi souple 7 prenant appui sur le panneau 1a ou 2a.

Conformément à l'invention, chacun des bandeaux 3, 4 est prééquipé d'au moins un équipement ayant une fonction technique distincte des moyens de fixation du bandeau 3, 4 au panneau extérieur 1a, 2a de la porte 1, 2.

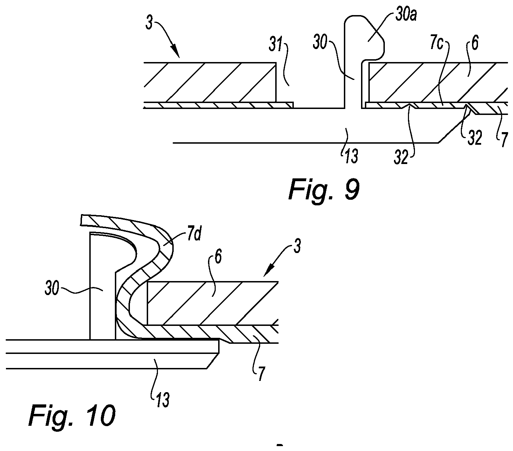

Cet équipement peut être par exemple un appareil d'éclairage 10 (voir figures 2, 3 et 4), un extracteur d'air 12 (voir 8), ou un enjoliveur 13 (voir figures 9 et 10). Dans l'exemple des figures 3, 4, 5 ; 8, 9 le bandeau 3 comporte des moyens de fixation adaptés pour permettre la fixation d'un ou plusieurs équipements 10, 12. Par ailleurs, dans le cas des figures 3, 4, 5 ; 8, les moyens de fixation sont réalisés sur la paroi 6 en matière plastique rigide du bandeau 3 pour garantir la rigidité de la fixation de l'équipement 10, 12, 13.

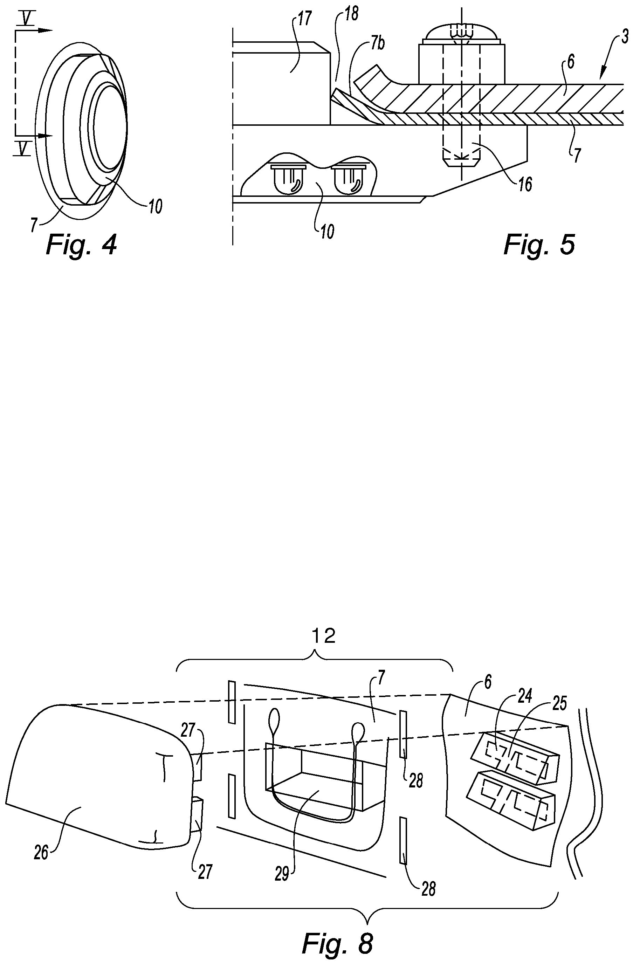

Dans l'exemple des figures 5, 8, 9 et 10, les moyens de fixation sont adaptés pour permettre la fixation de l'équipement 10, 12 ou 13 sur la face extérieure du bandeau 3, de telle sorte que cet équipement 10, 12 ou 13 prenne appui contre la paroi en matière souple 7 et serre celle-ci contre la paroi 6 en matière rigide.

En outre, dans ces exemples, les moyens de fixation sont adaptés pour coopérer avec un bord 7b (figure 5), 7c (figure 9), 7d (figure 10) de la paroi en matière souple 7 pour réaliser une liaison étanche entre l'équipement 10, 13 et le bandeau 3.

Dans le cas des figures 3, 4, 5, l'appareil d'éclairage 10 est disposé sur le bandeau 3 à proximité de la poignée de la porte.

L'allumage de cet appareil 10 peut être commandé par un capteur non représenté qui peut faire partie de l'appareil d'éclairage 10 ou être indépendant.

Lorsque ce capteur est indépendant de l'appareil 10, il peut être fixé au bandeau 3 à l'aide de moyens de fixation analogues à ceux de l'appareil 10.

Dans l'exemple de la figure 5, ces moyens de fixation comprennent une série de vis 16 traversant la paroi en matière rigide 6 et la paroi en matière souple 7 et vissées dans le corps de l'appareil 10.

Le bord 7b fait fonction de lèvre d'étanchéité avec la partie 17 de l'appareil qui est engagée dans un évidement 18 réalisé dans les parois 6 et 7.

Dans l'exemple de la figure 8, l'extracteur d'air 12 comprend, comme dans le cas de la figure 6, des ouvertures 24 et des déflecteurs 25 moulés avec la paroi rigide 6.

Le déflecteur 26 portant l'ouverture d'évacuation extérieure n'est pas moulé avec la paroi souple 7 mais est constitué par une pièce rapportée pouvant se fixer à la paroi rigide 6 grâce à des pattes de fixation 27 pouvant s'encliqueter dans des trous (non représentés) formés dans la paroi rigide 6.

Ces pattes 27 traversent des ouvertures 28 réalisées dans la paroi souple 7.

En position montée, le déflecteur 26 est appliqué de façon étanche sur la paroi souple 7 et recouvre une partie découpée 29 dans cette dernière.

Cette partie découpée 29 forme un volet qui peut s'ouvrir pour laisser passer l'air, lors de la fermeture de la porte.

La figure 9 montre que l'enjoliveur 13 est fixé contre la paroi souple 7 et contre la paroi rigide 6 au moyen d'une patte 30 portant un bec d'encliquetage 30a engagé dans une ouverture 31 formée dans les parois 6, 7.

La surface de l'enjoliveur 13 qui est appliquée contre la paroi souple 7 est pourvue de saillies 32 qui s'appuient contre la paroi souple 7 pour réaliser l'étanchéité de la liaison entre le bandeau et l'enjoliveur 13.

Dans le cas de la figure 10, l'étanchéité entre le bandeau 3 et l'enjoliveur 13 est réalisée grâce à une partie 7d de la paroi souple 7 engagée entre la patte 30 et la paroi rigide 6.

Bien entendu, l'invention n'est pas limitée aux exemples que l'on vient de décrire.

En effet, le bandeau 3, 4 de la porte latérale 1 ou 2 pourrait être équipé ou prééquipé d'autres équipements que ceux décrits.

Par ailleurs, le bandeau de protection pourrait être fixé sur d'autres parties de la carrosserie exposées aux petits chocs urbains, tels qu'un pare-choc ou une aile latérale.

## Revendications

1. Bandeau de protection (3, 4) en matière plastique destiné à être fixé sur une partie (1, 2) de la carrosserie d'un véhicule automobile, pour protéger celui-ci à l'égard des petits chocs urbains comprenant une paroi (6) en matière plastique rigide et une paroi (7) en matière plastique souple, ces deux parois (6, 7) étant en contact l'une avec l'autre dans des zones (6a) qui entourent des zones (9) dans lesquelles ces deux parois (6, 7) sont espacées l'une de l'autre, la paroi (6) en matière plastique rigide comportant sur l'une de ses faces des premiers moyens de fixation (8) pour fixer celle-ci à ladite partie (1, 2) de la carrosserie et la paroi (7) en matière souple recouvrant l'autre face de la paroi (6) en matière rigide, ledit bandeau (3, 4) étant équipé d'au moins un équipement (10, 11, 12, 13, 14, 15) ayant une fonction technique distincte des premiers moyens de fixation dudit bandeau (3, 4) à ladite partie (1, 2) de la carrosserie du véhicule, le bandeau comportant des seconds moyens de fixation adaptés pour permettre la fixation dudit au moins un équipement (10, 12, 13) réalisés au moins en partie sur la paroi (6) en matière plastique rigide du bandeau (3, 4) et adaptés pour permettre la fixation dudit équipement (10, 12, 13) sur la face extérieure du bandeau (3, 4), de telle sorte que cet équipement prenne appui contre la paroi en matière souple (7) et serre celle-ci contre la paroi (6) en matière rigide.

2. Bandeau de protection selon la revendication 1, **caractérisé en ce que** lesdits seconds de fixation sont adaptés pour coopérer avec un bord (7b, 7c, 7d) de la paroi (7) en matière souple pour réaliser une liaison étanche entre ledit équipement (10, 13) et le bandeau (3, 4).

3. Bandeau de protection selon l'une des revendications 1 ou 2, **caractérisé en ce que** ledit équipement est un appareil d'éclairage (10), un capteur ou un enjoliveur (13).

4. Partie de la carrosserie de véhicule automobile équipée d'un bandeau de protection selon l'une des revendications 1 à 3.

5. Partie de la carrosserie selon la revendication 4, **caractérisée en ce qu'**elle est une porte latérale, un pare-choc ou une aile latérale de véhicule automobile.

## Patentansprüche

1. Schutzstreifen (3, 4) aus Kunststoff, der dazu bestimmt ist, auf einem Teil (1, 2) des Aufbaus eines Kraftfahrzeugs befestigt zu sein, um dieses vor kleinen Stößen in städtischer Umgebung zu schützen, der eine Wand (6) aus starrem Kunststoff und eine Wand (7) aus biegsamem Kunststoff umfasst, wobei diese beiden Wände (6, 7) miteinander in Zonen (6a) in Berührung sind, die Zonen (9) umgeben, in welchen diese beiden Wände (6, 7) voneinander beabstandet sind, wobei die Wand (6) aus starrem Kunststoff auf einer ihrer Seiten erste Befestigungsmittel (8) umfasst, um diese an dem Teil (1, 2) des Aufbaus zu befestigen, und wobei die Wand (7) aus biegsamem Kunststoff die andere Seite der Wand (6) aus starrem Material abdeckt, wobei der Streifen (3, 4) mit mindestens einer Ausstattung (10, 11, 12, 13, 14, 15) ausgestattet ist, die eine technische Funktion hat, die von den ersten Befestigungsmitteln des Streifens (3, 4) an dem Teil (1, 2) des Aufbaus des Fahrzeugs unterschiedlich ist, wobei der Streifen zweite Befestigungsmittel umfasst, die angepasst sind, um das Befestigen der mindestens einen Ausstattung (10, 12, 13) zu erlauben, die mindestens zum Teil auf der Wand (6) aus starrem Kunststoff des Streifens (3, 4) hergestellt und angepasst sind, um die Befestigung der Ausstattung (10, 12, 13) auf der Außenseite des Streifens (3, 4) derart zu erlauben, dass sich diese Ausstattung gegen die Wand aus Kunststoff (7) stützt und diese gegen die Wand (6) aus starrem Material anpresst.

2. Schutzstreifen nach Anspruch 1, **dadurch gekennzeichnet, dass** die zweiten Befestigungsmittel angepasst sind, um mit einem Rand (7b, 7c, 7d) der Wand (7) aus biegsamen Material zusammenzuwirken, um eine dichte Verbindung zwischen der Ausstattung (10, 13) und dem Streifen (3, 4) herzustellen.

3. Schutzstreifen nach einem der Ansprüche 1 oder 2, **dadurch gekennzeichnet, dass** die Ausstattung ein Beleuchtungsgerät (10), ein Sensor oder eine Zierleiste (13) ist.

4. Kraftfahrzeug-Aufbauteil, der mit einem Schutzstreifen nach einem der Ansprüche 1 bis 3 ausgestattet ist.

5. Aufbauteil nach Anspruch 4, **dadurch gekennzeichnet, dass** er eine Seitentür, ein Stoßdämpfer oder ein Kraftfahrzeug-Seitenflügel ist.

## Claims

1. A protective strip (3, 4) of plastic material intended to be fixed to a part (1, 2) of the bodywork of a motor vehicle, to protect the latter with respect to small urban impacts, including a wall (6) of rigid plastic material and a wall (7) of flexible plastic material, these two walls (6, 7) being in contact with one another in regions (6a) which surround regions (9) in which these two walls (6, 7) are spaced apart from one another, the wall (6) of rigid plastic material comprising, on one of its faces, first fastening means (8) for fastening it to said part (1, 2) of the bodywork and the wall (7) of flexible material covering the other face of the wall (6) of rigid material, said strip (3, 4) being equipped with at least one piece of equipment (10, 11, 12, 13, 14, 15) having a technical function separate from the first means of fastening said strip (3, 4) to said part (1, 2) of the bodywork of the vehicle, the strip comprising second fastening means adapted to permit the fastening of said at least one piece of equipment (10, 12, 13), realized at least partially on the wall (6) of rigid plastic material of the strip (3, 4) and adapted to permit the fastening of said piece of equipment (10, 12, 13) on the exterior face of the strip (3, 4), such that this piece of equipment rests against the wall of flexible material (7) and holds the latter closely against the wall (6) of rigid material.

2. The protective strip according to claim 1, **characterized in that** said second fastening means are adapted to cooperate with an edge (7b, 7c, 7d) of the wall (7) of flexible material to realize a sealed connection between said piece of equipment (10, 13) and the strip (3, 4).

3. The protective strip according to one of claims 1 or 2, **characterized in that** said piece of equipment is a lighting fixture (10), a sensor or a trim (13).

4. A part of the bodywork of a motor vehicle equipped with a protective strip according to one of claims 1 to 3.

5. The part of the bodywork according to claim 4, **characterized in that** it is a side door, a bumper or a side wing of a motor vehicle.
